(19) Europäisches Patentamt
European Patent Office
Office européen des brevets

(11) Numéro de publication: **0 123 575**
**A1**

(12) # DEMANDE DE BREVET EUROPEEN

(21) Numéro de dépôt: **84400539.7**

(22) Date de dépôt: **16.03.84**

(51) Int. Cl.[3]: **C 10 M 1/32**
C 08 F 265/04
//(C08F265/04, 226/10)

(30) Priorité: **23.03.83 FR 8304766**

(43) Date de publication de la demande:
**31.10.84 Bulletin 84/44**

(84) Etats contractants désignés:
**AT BE CH DE FR GB IT LI LU NL SE**

(71) Demandeur: **SOCIETE FRANCAISE D'ORGANO-SYNTHESE Société Anonyme dite:**
**159, Avenue du Roule**
**F-92201 Neuilly(FR)**

(72) Inventeur: **Proux, Yves**
**39, rue des Cévennes**
**F-75015 Paris(FR)**

(72) Inventeur: **Gauchi, Jean-Pierre**
**27-29, Avenue de Brimont**
**F-78400 Chatou(FR)**

(74) Mandataire: **Richebourg, Michel François et al,**
**Cabinet Beau de Loménie 55, rue d'Amsterdam**
**F-75008 Paris(FR)**

(54) **Additifs pour huiles lubrifiantes à base de styrène et de méthacrylates lourds d'alkyle en C12-C20, procédé de fabrication et applications.**

(57) Additifs pour huiles lubrifiantes constitués par un copolymère réalisé à partir de 35-50% en poids de monomères de styrène et de 65-50% en poids de méthacrylates d'alkyles lourds en $C_{12}$-$C_{20}$ et 0-10% en poids de méthacrylate de butyle, et modifiables par greffage de N-vinylpyrrolidone.

Additifs dispersants des matières charbonneuses et du sludge; bonne stabilité thermique à 250°C.

Formulation d'huiles lubrifiantes.

EP 0 123 575 A1

Croydon Printing Company Ltd.

Additifs pour huiles lubrifiantes à base de styrène et de méthacrylates lourds d'alkyle en $C_{12}$-$C_{20}$, procédé de fabrication et applications.

La demande de brevet français n°81 00410 décrit des additifs pour huiles lubrifiantes constitués à partir de monomères styréniques et d'au moins un méthacrylate lourd d'alkyle en $C_{12}$-$C_{20}$; ces additifs peuvent en outre contenir de 1 à 5% en poids d'au moins un monomère dispersant choisi parmi les suivants : diméthylamino-éthylméthacrylate, N-vinylpyrrolidone, N-vinylimidazole, N-vinylpyridine, monométhacrylate d'éthylèneglycol et tout autre dérivé à fonction azotée ou hydroxylée.

On sait que les huiles moteur finies sont élaborées à partir de plusieurs additifs présentés sous forme de "packages" commerciaux, ou ensemble de produits, dont chacun remplit une fonction très spécifique, par exemple : dialkyldithiophosphate de zinc, sulfonates de Ca ou Mg (inhibiteurs de corrosion et rôle protecteur), polysuccinimides (dispersifs détergents dont le rôle se limite à décoller les dépôts charbonneux produits lors du fonctionnement du moteur), etc.

Il s'est avéré que les additifs pour huiles décrits dans la demande précitée ne présentaient pas une tenue thermique suffisante en présence de certains "packages" commerciaux, en particulier ceux contenant des dialkyldithiophosphates de zinc et sulfonates de calcium.

La présente invention concerne une gamme de produits sélectionnés parmi ceux décrits dans la demande précitée. Les additifs pour huiles lubrifiantes selon l'invention sont constitués par un copolymère réalisé à partir de 35-50% en poids de monomères de styrène, 65-50 % en poids de méthacrylate(s) d'alkyle(s) lourd(s) en $C_{12}$-$C_{20}$ et 0-10 % en poids de méthacrylate de butyle.

Ce copolymère doit présenter une polydispersité aussi faible que possible, un paramètre de solubilité proche de celui de l'huile à laquelle les additifs sont destinés, et une masse moléculaire en poids comprise entre 80.000 et 200.000.

Il a été constaté selon l'invention qu'un tel copolymère présente une stabilité thermique supérieure avec les "packages" commerciaux connus s'il ne contient, comme agent modifiant, ni diméthylamino-éthylméthacrylate, ni N-vinylimidazole, mais seulement la N-vinylpyrrolidone.

La présente invention vise donc les copolymères décrits ci-dessus et modifiés par greffage de N-vinylpyrrolidone seule.

La modification pourra être effectuée par 3 à 5% de N-vinylpyrrolidone, de préférence 4% en poids par rapport au copolymère monomères styréniques/méthacrylate(s) d'alkyle(s) lourd(s).

Un autre avantage essentiel des additifs selon l'invention réside dans le fait qu'il est possible de réaliser, pour leur préparation, la polymérisation directement dans une huile pétrolière, sans solvant.

Dans l'art antérieur, où l'on devait avoir recours à un solvant, le produit sortait moins bien du réacteur et surtout il était obligatoire d'éliminer ce solvant (par exemple le toluène) avant d'opérer le mélange du polymère avec l'huile choisie.

Selon l'invention, on polymérise directement les matières actives dans 15 à 25%, de préférence 20% en poids, d'huile pétrolière classique (comme par exemple l'huile 150 N ou 200 N).

Les additifs selon l'invention présentent de plus un meilleur pouvoir dispersant (c'est-à-dire de maintien en dispersion des matières charbonneuses et autres) que les additifs selon le brevet principal, dont ils conservent cependant les autres propriétés intéressantes (viscosité, VIE, cisaillement).

Il est surprenant que l'on soit parvenu à réaliser un greffage de N-vinylpyrrolidone seule sur une chaîne comportant des motifs styrène et des motifs méthacryliques. L'homme de métier sait qu'il s'agit d'une réaction extrêmement difficile dont, à notre connaissance, il n'est pas fait mention dans la littérature.

L'invention concerne donc des produits dont la structure est très originale et apporte un ensemble de propriétés jamais réunies auparavant, parmi lesquelles la tenue thermique avec tous les "packages" connus pour huiles moteur, la possibilité de synthèse directement dans une huile, sans solvant organique, et une bonne stabilité thermique à 250°C, propriété particulièrement intéressante dans le cas des huiles pour moteurs Diesel.

Le mode opératoire de préparation de l'additif pour huiles lubrifiantes selon l'invention est le suivant.

- La charge de monomères styrène et méthacryliques (cétyle et butyle) est diluée à 75 % en poids dans l'huile pétrolière 150 N.

- Un tiers de cette charge est introduit dans un réacteur en verre (capacité : 1,2 litre) muni d'un agitateur, d'un thermometre enregistreur, d'un réfrigérant et d'une ampoule d'introduction. Le réacteur est mis en chauffe.

- Quand la température de consigne de 90°C est atteinte, l'initiateur de polymérisation Trigonox 21 S est introduit au taux de 1,5% en poids par rapport au poids des monomères dans le réacteur.

- 15 min après, la température est à 102°C environ puis redescend progressivement.

- 10 min après cette pointe de température, on commence l'introduction des deux tiers restants du mélange additivé de 1,5% en poids d'initiateur Trigonox 21 S par rapport aux monomères. Cette introduction au goutte à goutte dure environ 2 h 30 min, tandis que la viscosité du mélange réactionnel s'accroît fortement.

- En fin d'introduction, la température est d'environ 93-95°C. On laisse en palier 30 min.

- En fin de palier, on porte la température du mélange réactionnel à 120°C en 30 min.

- Quand cette nouvelle consigne de température de 120°C est atteinte, on introduit 0,17% en poids (par rapport à la matière active polymérisante) d'initiateur PBTB, soit un rapport PBTB/NVP de 4%.

- 10 min après, la N-vinylpyrrolidone est introduite en 30 min, au goutte à goutte.

- 1 et 2 h après, deux ajouts de 0,08% de PBTB sont introduits, soit un rapport PBTB/NVP de 2%.

- La polymérisation est poursuivie 1 h 30 min après le deuxième ajout. La réaction dure 8 h au total. Le produit obtenu est coulable et analysé (8.200 cps à 100°C).

A l'échelle industrielle, ce procédé pourra être aménagé autour des valeurs numériques données ci-dessus.

Initiateur de polymérisation

- TRIGONOX T 21 S d'origine AKZO CHEMIE :

Peroxy-2-éthyl hexanoate de tertiobutyle (actif à 90°C)

Formule développée :

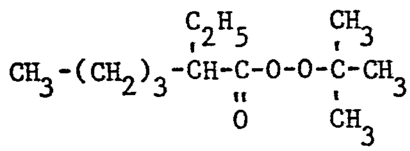

PM = 216,3

Liquide limpide.

Initiateur de greffage

- TRIGONOX C d'origine AKZO CHEMIE :

Perbenzoate de tertiobutyle (actif à 120°C)

Formule développée :

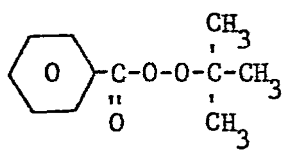

(PBTB)

PM = 194,2

Liquide limpide.

Les exemples suivants illustrent l'invention sans toutefois en limiter la portée.

Exemple 1 :

| | % en poids |
|---|---|
| - Styrène | 21,6 |
| - Méthacrylate de cétyle | 50,4 |
| - N-vinylpyrrolidone | 3 |
| - Huile pétrolière 150 Neutral | 25 |

On prépare l'additif selon le mode opératoire indiqué plus haut (75% de matières actives dans 25% d'huile, en poids).

Exemple comparatif A :

On opère selon le même mode opératoire, mais en utilisant du N-vinylimidazole et du diméthylaminoéthylméthacrylate, outre la N-vinylpyrrolidone, selon la formulation suivante :

| | % en poids |
|---|---|
| - Méthacrylate de cétyle | 16,1 |
| - Méthacrylate de lauryle | 3,2 |
| - Styrène | 12,9 |
| - Diméthylaminoéthylméthacrylate (MADAM) | 0,33 |

- N-vinylpyrrolidone 0,33
- N-vinylimidazole 0,16
- Huile (dilution) 77

Exemple comparatif B :

On a repris la formule de l'exemple 1 selon l'invention et utilisé le même mode opératoire, mais avec un seul catalyseur, le produit "TRIGONOX T 21 S" (initiateur de polymérisation), et donc sans initiateur de greffage.

Les résultats de l'exemple 1 et des exemples comparatifs A et B sont rassemblés dans le tableau ci-après.

TABLEAU

| Exemple | Sans "package" OROGIL OLOA 8365 G | Avec "package" OROGIL OLOA 8365 G |
|---|---|---|
| 1 (invention) | 5,5,5,5 | 5,5,5,5 |
| A (comparatif) | 5,4,2,1 | 2,1,1,1 |
| B (comparatif) | 1,1,1,1 | 1,1,1,1 |

Pour établir ce tableau, on a effectué l'essai dit "à la tache" (méthode IFP, cf. brevet principal page 6) qui permet d'évaluer le pouvoir dispersant de 0 (nul) à 5 (excellent). L'essai a été conduit à 250°C, pour dans chaque cas quatre concentrations en matières actives polymères : 4, 2, 1 et 0,5% en poids qui donnent de gauche à droite les quatre chiffres rassemblés dans chaque case du tableau .

Ce tableau montre que :

- Le produit de l'essai A apparaît incompatible avec le package.
- Le produit de l'essai B n'a pas de pouvoir dispersant, même en l'absence de ce package.

Exemple 2 :

On a repris le mode opératoire de l'exemple 1 en opérant dans 20% d'huile :

| | | | |
|---|---|---|---|
| Styrène | 30,72% en poids, soit 38,4 | } | % matières actives |
| Méthacrylate de cétyle | 46,08% en poids, soit 57,6 | | |
| N-vinylpyrrolidone | 3,2% en poids, soit 4 | | |
| Huile 150 N | 20 % en poids 100 | | |
| | 100 | | |

Exemple 3

On a repris le mode opératoire de l'exemple 1, en incorporant également du méthacrylate de butyle :

| | |
|---|---|
| Styrène | 31 % en poids |
| Méthacrylate de cétyle | 42 % en poids |
| Méthacrylate de butyle | 3,8 % en poids |
| N-vinylpyrrolidone | 3,2 % en poids |
| Huile pétrolière 150 N | 20 % en poids |
| | 100 |

Résultats d'essais

La figure 1 annexée représente un thermogramme DSC réalisé sur la formulation de l'exemple 1. La ligne de base (a) est très bonne, tandis que le point endothermique se situe à presque 400°C, ce qui est un excellent résultat ("TEFLON" : environ 450°C).

La figure 2 annexée représente le thermogramme réalisé sur le produit connu "PLEXOL 1420" commercialisé par la société Rohm et Haas.

L'appareil utilisé est le THERMAL ANALYZER DUPONT 1.090 fabriqué par DUPONT INSTRUMENTS.

La méthode employée est une méthode DSC (différential scaning calorimetry) qui consiste à mesurer et enregistrer les variations du flux thermique qui traverse un échantillon quand celui-ci est soumis à une montée en température programmée.

Les thermogrammes sont obtenus ici dans les conditions suivantes :

- Pesée de l'échantillon : environ 30 mg
- Atmosphère d'azote (débit 50 cc/min.) dans la cellule de mesure
- Programme de chauffe de 30 degrés par minute à partir d'une température initiale de 40°C jusqu'à 450°C environ.

# R E V E N D I C A T I O N S

1. Additifs pour huiles lubrifiantes, caractérisés en ce qu'ils sont constitués par des copolymères réalisés à partir de monomères styréniques, d'au moins un méthacrylate lourd d'alkyle en $C_{12}$-$C_{20}$ et de 0-10 % en poids de méthacrylate de butyle, en ce que les monomères styréniques représentent de 35 à 50 % en poids du copolymère et le ou les méthacrylate(s) d'alkyle(s) lourd(s) de 65 à 50 % en poids du copolymère, en ce que ledit copolymère présente une polydispersité aussi faible que possible, un paramètre de solubilité proche de celui de l'huile à laquelle lesdits additifs sont destinés, et une masse moléculaire en poids de 80.000 à 200 000, ces copolymères étant modifiés par greffage de 3 à 5 % en poids, de préférence 4 %, de N-vinylpyrrolidone seule.

2. Additif selon la revendication 1, caractérisé en ce qu'il est préparé par polymérisation directe dans une huile pétrolière de :

| | |
|---|---|
| Styrène | 21,6% en poids |
| Méthacrylate de cétyle | 50,4% en poids |
| N-vinylpyrrolidone | 3 % en poids |
| (Huile pétrolière) | 25 |
| | 100 |

3. Additif selon la revendication 1, caractérisé en ce qu'il est préparé par polymérisation directe dans une huile pétrolière de :

| | |
|---|---|
| Styrène | 30,72% en poids |
| Méthacrylate de cétyle | 46,08% en poids |
| N-vinylpyrrolidone | 3,2 % en poids |
| (Huile pétrolière) | 20 |
| | 100 |

4. Additif selon la revendication 1, caractérisé en ce qu'il est préparé par polymérisation directe dans une huile pétrolière de :

| | | |
|---|---|---|
| Styrène | 31 | % en poids |
| Méthacrylate de cétyle | 42 | % en poids |
| Méthacrylate de butyle | 3,8 | % en poids |
| N-vinylpyrrolidone | 3,2 | % en poids |
| Huile pétrolière 150 N | 20 | % en poids |
| | 100,- | |

5. Additif selon l'une quelconque des revendications 1 à 4, caractérisé en ce que l'huile pétrolière est de l'huile 150 Neutral ou 200 Neutral.

6. Procédé de préparation des additifs selon l'une quelconque des revendications 1 à 5, caractérisé en ce que :

- la charge en monomères styrène et méthacrylique est diluée dans l'huile,
- 1/3 de cette charge est mise en chauffe dans le réacteur,
- on introduit une quantité efficace d'initiateur de polymérisation à sa température d'utilisation,
- 10 min environ après la pointe de température qui résulte de cette addition, on commence l'introduction lente des 2/3 restants de la charge, contenant une quantité efficace dudit initiateur de polymérisation,
- on introduit une quantité efficace d'initiateur de greffage puis, 10 min après, la N-vinylpyrrolidone, lentement,
- on termine le greffage et la polymérisation.

0123575

Fig-1

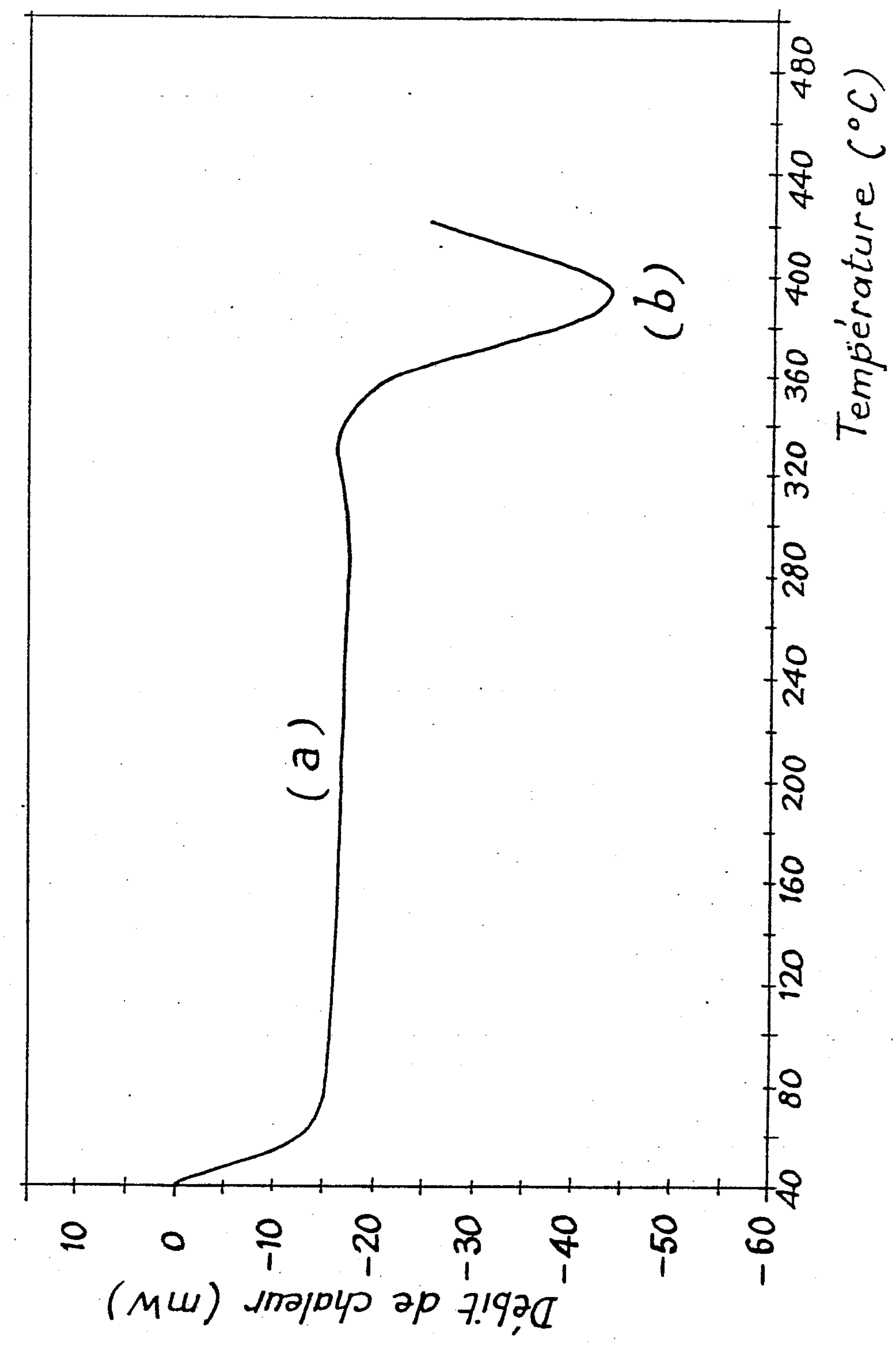

Fig-2

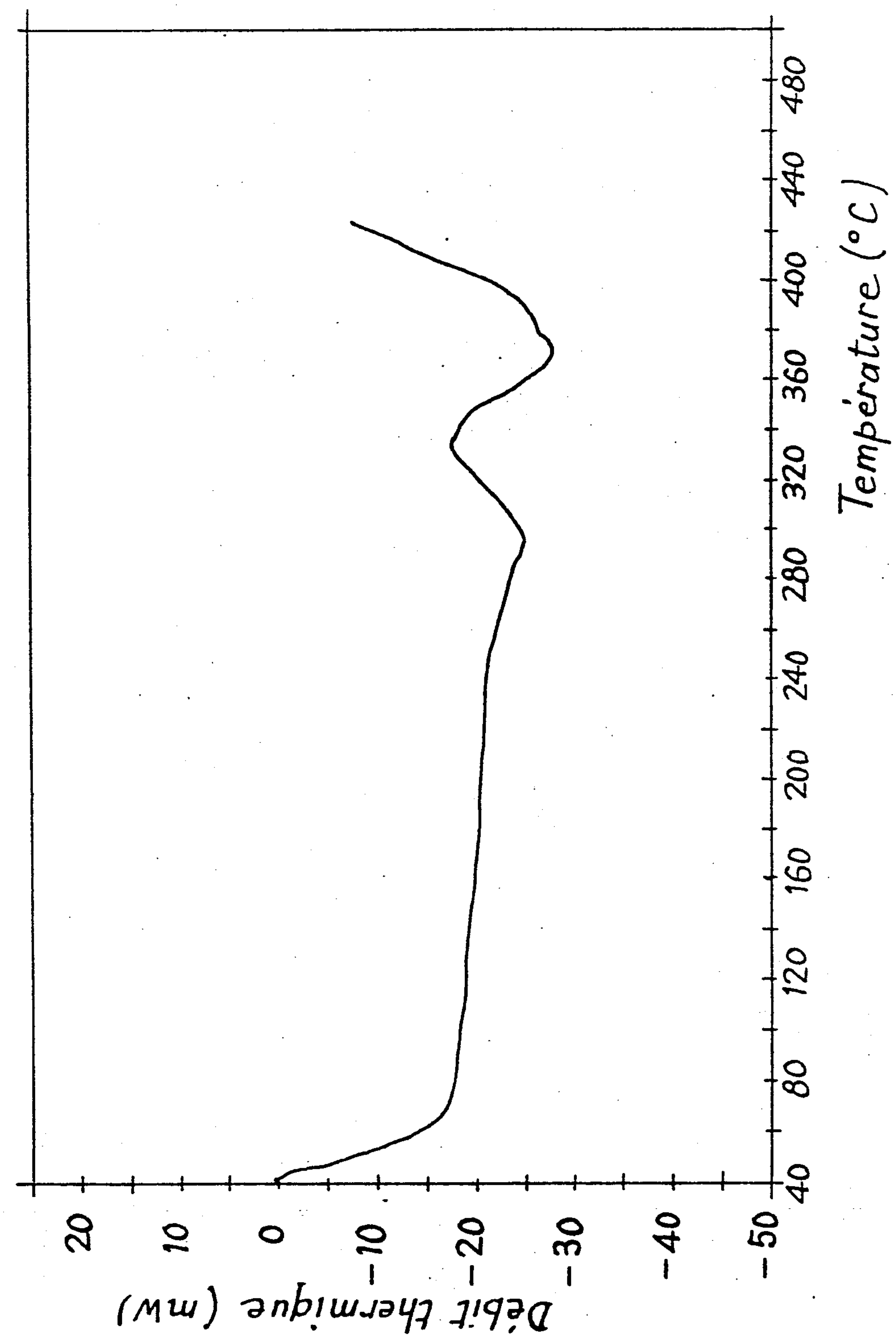

Débit thermique (mW)
20
10
0
-10
-20
-30
-40
-50
Température (°C)
40
80
120
160
200
240
280
320
360
400
440
480

Office européen des brevets

**RAPPORT DE RECHERCHE EUROPEENNE**

0123575

Numéro de la demande

EP 84 40 0539

**DOCUMENTS CONSIDERES COMME PERTINENTS**

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-3 506 574 (R.L. STAMBAUGH) * Revendications 1,2; colonne 3, ligne 1 - colonne 4, ligne 32; colonne 5, lignes 15-41 * | 1-6 | C 10 M 1/32<br>C 08 F 265/04 //<br>(C 08 F 265/04<br>C 08 F 226/10 ) |
| | --- | | |
| D,A | EP-A-0 056 342 (SOCIETE FRANCAISE D'ORGANO-SYNTHESE) * En entier * | 1 | |
| | ----- | | DOMAINES TECHNIQUES RECHERCHES (Int. Cl. 3) |
| | | | C 10 M<br>C 08 F |

Le présent rapport de recherche a été établi pour toutes les revendications

| Lieu de la recherche | Date d'achèvement de la recherche | Examinateur |
|---|---|---|
| LA HAYE | 28-05-1984 | ROTSAERT L.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant